# EUROPÄISCHE PATENTSCHRIFT

(11) **EP 1 442 339 B1**
(45) Veröffentlichungstag und Bekanntmachung des Hinweises auf die Patenterteilung: **30.03.2005**
(21) Anmeldenummer: 02776864.7
(22) Anmeldetag: 28.10.2002
(51) Int. Cl.: G05B 23/02

(54) **VERFAHREN ZUR VERMEIDUNG ODER MINIMIERUNG VON FEHLFUNKTIONEN EINER TECHNISCHEN ANLAGE**
METHOD FOR PREVENTING OR MINIMIZING OPERATIONAL FAILURE IN A TECHNICAL INSTALLATION
PROCEDE PERMETTANT D'EVITER OU DE REDUIRE A UN MINIMUM LA DEFAILLANCE DE FONCTIONS D'UNE INSTALLATION TECHNIQUE

(30) Priorität: 08.11.2001 DE 10154482
(43) Veröffentlichungstag der Anmeldung: 04.08.2004
(73) Patentinhaber: SIEMENS AKTIENGESELLSCHAFT, 80333 München (DE)
(72) Erfinder: GRIEB, Herbert, 76316 Malsch (DE); KIRCHBERG, Karl-Heinz, 76149 Karlsruhe (DE); LINZENKIRCHNER, Edmund, 76344 Eggenstein-Leopoldshafen (DE); MERZ, Erich, 76764 Rheinzabern (DE); SCHWAB, Robert, 76187 Karlsruhe (DE)
(86) Internationale Anmeldenummer: PCT/DE2002/004030
(87) Internationale Veröffentlichungsnummer: WO 2003/040843

(56) Entgegenhaltungen:
- EP-A- 0 509 817
- EP-A- 0 612 039
- EP-A- 0 626 697
- EP-A- 0 908 805
- DE-A- 4 008 560
- DE-A- 4 335 256

## Beschreibung

Die Erfindung richtet sich auf ein Verfahren zur Vermeidung oder Minimierung von Fehlfunktionen einer technischen Anlage, wobei anhand für ein Leitsystem zugänglicher Einflußgrößen, insbesondere überwachter Anlagengrößen und/oder sonstiger, insbesondere äußerer Einflüsse, wenigstens ein Kriterium definiert wird, dessen Vorliegen als Prognostikum für eine bevorstehende Funktionsbeeinträchtigung und/oder für einen bevorstehenden Ausfall eines oder mehrerer Anlagenteile verwendet wird, wobei dieses Kriterium in kurzen Zeitintervallen ständig überprüft wird, um eine Prognose über die bevorstehende Ausfallwahrscheinlichkeit und/oder Funktionsbeeinträchtigung zu erstellen, wobei anhand dieser Prognose gegebenenfalls frühzeitig Gegenmaßnahmen zur Vermeidung des Ausfalls und/oder der Funktionsbeeinträchtigung ergriffen oder veranlaßt werden und/oder Vorkehrungen getroffen werden, um die Auswirkungen des bevorstehenden Ausfalls und/oder der Funktionsbeeinträchtigung zu minimieren, wobei das als Prognostikum verwendete Kriterium derart von den betreffenden Anlagengrößen abgeleitet ist, dass Unregelmäßigkeiten erkannt werden, wenn noch von keiner Anlagengröße ein die sofortige Abschaltung der Anlage oder eines Teils davon erfordernder Grenzwert überschritten wird.

Der Mensch lernt beständig, immer kompliziertere technische Verfahren zu beherrschen und nutzbringend einzusetzen. Dies wird insbesondere auch durch den verbreiteten Einsatz von automatischen Steuerungen ermöglicht, die im Normalbetrieb aufwendige Steuerungs- und Regelungsaufgaben übernehmen. Mit zunehmender Komplexität technischer Anlagen steigt jedoch auch deren Ausfallwahrscheinlichkeit, da sich die Ausfallwahrscheinlichkeiten der für die Anlage relevanten Komponenten additiv überlagern. Die Ausfallwahrscheinlichkeit der gesamten Anlage steigt demnach mit der Anzahl ihrer relevanten Komponenten. Trotz dieses immer gravierender werdenden Problems der beschränkten Verfügbarkeit komplexer Anlagen ist in der Technik bislang kein wirkungsvoller Lösungsvorschlag gemacht worden. Eine Abkürzung der Wartungsintervalle findet ihre Grenzen durch die erhöhten Stillstandszeiten während der Wartungsmaßnahmen. Handelsübliche Diagnoseprogramme, welche der schnellen Fehlereingrenzung dienen, können erst nach Auftreten eines Fehlers aktiviert werden, wenn also die Anlage möglicherweise bereits stillsteht. Somit setzt die Behandlung eines Fehlers erst nach dessen Auftreten ein - ein Ausfluß des weltweit verbreiteten Kausalitätsprinzips - und selbst die modernsten Diagnoseprogramme können hohe Stillstandszeiten nicht vermeiden, weil eine im akuten Fehlerfall gebotene, schnelle Instandsetzung von gänzlich anderen Faktoren abhängt wie beispielsweise von der Verfügbarkeit spezieller Ersatzteile.

Die Offenlegungsschrift DE 40 08 560 A1 offenbart ein Verfahren zum Bestimmen der Restlebensdauer eines aus einer Mehrzahl von Bauteilen aufgebauten und wenigstens eine Funktion besitzenden Aggregats. Die Berechnungen werden durchgeführt, bspw. um festzustellen, ob Prüfungs- oder Wartungsmaßnahmen noch um ein oder mehrere Jahre verzögert werden können. Für diese Berechnungen wird ein eigenes Expertensystem verwendet, bestehend aus Informationserfassungsunterstützungsvorrichtung, Schlußfolgerungsvorrichtung, Benutzerschnittstelle, externer Schnittstelle und Informationsbank. Es handelt sich somit über ein hardwaremäßig sehr aufwendiges Verfahren, insbesondere wenn eine Vielzahl von Informationen erfaßt und verarbeitet werden sollen, so dass die Informationserfassungsunterstützungsvorrichtung sehr groß gerät.

Einen ähnlichen Offenbarungsgehalt zeigt die EP 0 509 817 A1, mit der Ausnahme, dass dort nur die verbleibende Standzeit eines Schneidwerkzeugs zu bestimmen ist und sich demzufolge die Größe des Expertensystems, insbesondere die Anzahl der von diesem benötigten Sensoren, in Grenzen hält.

Auch der EP 0 908 805 A1 ist eine mehr oder weniger aufwendige Vorrichtung für eine vorausschauende Wartung zu entnehmen. Darüber hinaus wird diese Vorrichtung nur in Zeitabständen von jeweils einer Stunde aktiv, um anhand von Mittelwerten der in der jeweils vergangenen Stunde gespeicherten Daten eine Überprüfung der Fälligkeit von Wartungsmaßnahmen vorzunehmen. Für die üblichen Wartungszeitintervalle von bspw. einem oder mehreren Jahren mag dies ausreichend sein, um verschleißbedingte Alterungsprozesse zu erfassen; in der Praxis zeigt sich jedoch, dass auch akute Probleme auftauchen, bspw. ausgelöst durch Fehlbedienungen od. dgl., bei denen eine derart langsame Reaktion nicht ausreichend ist, um größeren Schaden abzuwenden.

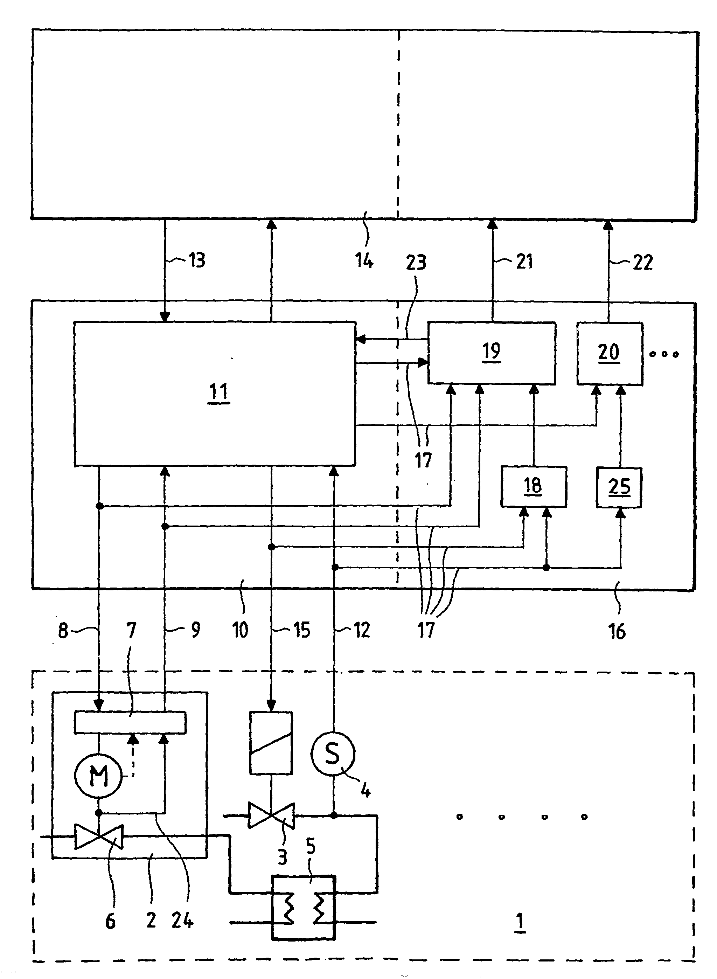

Die EP 0 626 697 A1 betrifft ein Uberwachungs- und Diagnoseverfahren für eine Fabrik sowie eine damit ausgerüstete Fabrik. Wie sich aus den dortigen Fig. 7 und 11 ergibt, gibt es dabei zwar eine Kopplung zwischen dem Diagnosesystem und dem Steuerungssystem. Der Datenfluß ist jedoch nur von dem Diagnosesystem zum Steuerungssystem gerichtet, so dass für das Diagnosesystem eine eigene Hardware benötigt wird, einschließlich eigener Sensoren und/oder Auswertungsschaltungen für Sensorsignale, was vergleichsweise aufwendig ist.

Schließlich ist der EP 0 612 039 A2 ein Wartungssystem mit Berücksichtigung der Abnutzung von Komponenten einer Fabrik zu entnehmen. Das hieraus vorbekannte Verfahren besteht darin, die voraussichtliche Betriebsdauer einzelner Komponenten einer Anlage unter Berücksichtigung der konkreten Betriebsbedingungen so exakt als möglich zu bestimmen. Der Einleitung dieses Dokuments ist allerdings zu entnehmen, dass bei diesem Dokument das Hauptaugenmerk auf der Entwicklung und Konstruktion neuer Fabriken mit geringem Wartungsaufwand liegt. Insofern wird das hier vorgestellte System nicht in Echtzeit abgearbeitet und kann dann auch bei der überwachung einer fertigen Anlage keine Dienste leisten. Ein derartiges System umfaßt einen Speicher, Berechnungs- und Anzeigemittel und kann auch an ein Überwachungssystem einer bestimmten Anlage angeschlossen werden. Dadurch können die Berechnungen optimiert werden. Dennoch kann auch hier auf eine eigene Hardware nicht verzichtet werden, was in vielen Fällen einen solchen Einsatz unwirtschaftlich macht.

Aus diesen Nachteilen des beschriebenen Stands der Technik resultiert das die Erfindung initiierende Problem, eine Möglichkeit zu schaffen, wie die Verfügbarkeit technischer Anlagen mit möglichst geringem Aufwand erheblich gesteigert werden kann. Dabei ist zu berücksichtigen, dass gerade bei kleinen, automatisierten Anlagen jede zusätzliche, für ein solches Verfahren benötigte Komponente als unwirtschaftlich empfunden wird, da sie im normalen Betrieb der Anlage keinerlei Produktivitätssteigerung erkennen läßt.

Die Lösung dieses Problems gelingt dadurch, dass von dem Leitsystem der technischen Anlage wenigstens ein als Prognostikum dienendes Kriterium unter Verwendung von aktuellen Anlagengrößen nahezu unverzögert und damit in Echtzeit bestimmt wird, indem dieses Kriterium im Rahmen eines zusätzlich zu dem Steuerprogramm in einer speicherprogrammierbaren Steuerung hinterlegten Funktionsbausteins implementiert ist, wobei ein zu erwartender Ausfall an eine Bedienungs- und Beobachtungsstation gemeldet wird.

Damit wendet sich die Erfindung ab von dem weltweit gültigen Kausalitätprinzip, wonach eine Reaktion (Instandsetzung) erst nach einer Aktion (Ausfall eines Anlagenteils bzw. Stör- oder Fehlerfall) folgt. Durch eine wirkungsvolle Prognose wird das Auftreten künftiger Fehler vorhergesehen, so dass die Reaktion, nämlich die Behebung der möglichen Fehlerursachen, vor der eigentlichen Aktion, nämlich dem Auftreten des Fehlers, eingeleitet werden kann und dadurch ein reibungsloses Funktionieren des betreffenden Anlagenteils sichergestellt werden kann. Dabei ist es von großem Vorteil, möglichst weit in die Zukunft sehen zu können, um einen möglichst langen Reaktionszeitraum bis zu dem voraussichtlichen Ausfall eines Anlagenteils zu haben, so dass erforderliche Instandhaltungs- oder Wartungsmaßnahmen ohne Eile durchgeführt werden können. So bleibt genügend Zeit, um z. B. Ersatzteile zu bestellen oder einen günstigen Zeitpunkt für den Einbau eines Ersatzteils auswählen zu können. Die Prognose wird anhand von Prognostika, also Vorzeichen, durchgeführt, die aus technischwissenschaftlichen Überlegungen eine reduzierte Betriebsdauer bestimmter Anlagenteile erwarten lassen. Die Treffsicherheit der erfindungsgemäßen Prognose steht und fällt daher mit einer präzisen Definition der als Prognostika verwendeten Kriterien, wobei eine exakte Prognose oftmals erst kurz vor dem Ausfall eines Anlagenteils erstellt werden kann, wenn sich die Vorzeichen eines bevorstehenden Ausfalls mehren bzw. an Deutlichkeit zunehmen. Andererseits genügt oftmals bereits die sogar aus Erfahrungswerten ableitbare Erkenntnis, dass bestimmte Betriebsbedingungen die Betriebsdauer eines Bauteils reduzieren, was bspw. durch Abweichungen bestimmter Prozeßgrößen von für diesen definierten Nennwerten festgestellt werden kann, um entweder durch eine vorgezogene Wartungsmaßnahme der Anlage die Betriebsbedingungen wieder zu normalisieren und/oder ggf. ein dadurch gefährdetes Bauteil vorzeitig zu ersetzen. Im Idealfall gelingt es, ein für die Prognose zu überprüfendes Kriterium aus den zwecks Steuerung der betreffenden Anlage ohnehin bekannten, weil gemessenen Anlagengrößen zu bestimmen; falls eine oder mehrere der hierfür relevanten Größen nicht vorliegen, kann entweder eine Schätzung anhand anderer, bekannter Größen vorgenommen werden oder - in wichtigen Fällen - ein zusätzlicher Sensor verwendet werden. Im Gegensatz zu Notabschaltungen verursachenden Grenzwertüberschreitungen arbeitet das erfindungsgemäße Prognoseverfahren mit "weichen" Kriterien, die sich im Normalfall noch innerhalb des zulässigen Toleranzbereichs bewegen. Denkbar sind ungefährliche, aber deutliche Abweichungen von vordefinierten Nennwerten bestimmter Betriebsgrößen (z.B. permanent überhöhte Luftfeuchtigkeit im Bereich von Schaltanlagen), starke tendenzielle Veränderungen in Richtung kritischerer Werte (z.B. ein schneller Temperaturanstieg innerhalb des zulässigen Temperaturbereichs), gefährliche Kombinationen von unterschiedlichen Betriebsparametern (wenn bspw. die Zuflußmenge zu einem weitgehend gefüllten Behälter deutlich größer ist als dessen Abflußmenge). Obzwar das erfindungsgemäße Verfahren auch von einem eigenen Computer durchgeführt werden kann, so bietet eine rein softwaretechnische Lösung im Rahmen bestehender Hardwarekomponenten den Vorteil, dass bspw. im Rahmen eines routinemäßigen Updates des Steuerprogramms für ein Automatisierungssystem und/oder einer Bedienungs- und Beobachtungssystem und damit nahezu unmerklich für den Anlagenbeteiber erheblich erweiterte Sicherheitsvorkehrungen implementiert werden können. Mit dem Einbau zusätzlicher Hardwarekomponenten kann auch eine entsprechende Testphase abgekürzt werden oder ganz entfallen. Wenn zur Bestimmung eines Prognostikums das Automatisierungssystem der betreffenden, technischen Anlage verwendet wird, muß einerseits die Datenübertragung über ein firmeneigenes Datennetzwerk kaum modifiziert werden; im Normalbetrieb "sieht" ein übergeordnetes Bedienungs- und Beobachtungssystem keine Veränderung gegenüber dem bisherigen Betrieb, während nur bei prognostizierten Problemen eine entsprechende Meldung verschickt wird. Andererseits kann die Prognose nahezu unverzögert stattfinden, da die Datenübertragung über ein Netzwerk nicht abgewartet werden muß, bis eine Auswertung erfolgen kann; aus diesem Grund eignet sich diese Verfahrensvariante besonders für schnelle Prozesse, die ggf. eine schnelle Reaktion erfordern, oder für Prozesse mit vielen Größen und einer entsprechend umfangreichen Informationsflut.

Indem ein als Prognostikum verwendetes Kriterium in kurzen Zeitabständen, insbesondere in Abständen von weniger als einer Sekunde, und damit in Echtzeit, überprüft wird, können auf Fehlfunktionen hinweisende Betriebskennwerte frühzeitig erkannt und ausgewertet werden, so dass eine maximale Reaktionszeit verbleibt.

Da das als Prognostikum verwendete Kriterium im Rahmen eines oder mehrerer, an ein Steuerprogramm eines Automatisierungssystems angefügter Funktionsbausteine implementiert ist, bietet es sich an, die betreffenden Funktionsbausteine bei jedem Rechenzyklus des Automatisierungssystems einmal abzuarbeiten. Dies setzt allerdings voraus, dass die zur Erstellung einer Prognose erforderlichen Rechenschritte nicht erheblich verlängern und dadurch die Steuerung selbst merklich träger werden lassen; solchenfalls können die betreffenden Funktionsbausteine bzw. deren Abarbeitung auch nach Art einer Task auf mehrere Intervallzeiten zwischen einzelnen Rechenzyklen des Steuerprogramms verteilt werden. In dem Automatisierungs- bzw. Steuergerät liegen alle Informationen nahezu unverzögert vor.

Die Erfindung bietet die Möglichkeit, dass im Rahmen der U-berprüfung eines als Prognostikum verwendeten Kriteriums Anderungstendenzen einer oder mehrerer Einflußgrößen einbezogen werden. Der Begriff der Einflußgröße soll in diesem Zusammenhang weit ausgelegt werden; zu denken ist bspw. auch an rasch ansteigende Temperaturen innerhalb eines Schaltschranks, was einerseits bspw. auf die Fehlfunktion eines Gerätes oder den Ausfall eines Lüfters hindeuten und andererseits ohne Gegenmaßnahmen zu größeren (Folge-)Schäden führen kann.

Weiterhin können im Rahmen der Überprüfung eines als Prognostikum verwendeten Kriteriums Plausibiltätsbetrachtungen zwischen zwei oder mehreren Einflußgrößen angestellt werden. Somit lassen sich einerseits nicht registrierte Fehler vermuten, bspw. wenn trotz eines von der Steuerung erteilten Befehls zum Öffnen eines Ventils eine entsprechende Strömung von einem nachgeordneten Sensor nicht erkannt werden kann. Diese Betrachtungen können jedoch auch weitaus komplexer sein und bspw. Vergleiche mit von der Steuerung anhand eines hinterlegten Rechenmodells der Anlage ermittelten Betriebsgrößen umfassen.

Im Rahmen der Prognose über die bevorstehende Ausfallwahrscheinlichkeit läßt sich die verbleibende Laufzeit der Anlage und/oder der Grad der Funktionsbeeinträchtigung der Anlage durch den Ausfall abschätzten, um die Art der Gegenmaßnahmen und/oder Vorkehrungen zu bestimmen. Die Palette der möglichen Reaktionen reicht von einem verkürzten Wartungsintervall eines speziellen Anlagenteils über den umgehenden Austausch eines schadhaften oder gefährdeten Anlagenteils und über einen Betrieb der Anlage mit verminderter Leistung zur Schonung einer oder mehrerer Komponenten bis hin zur vorsorglichen Sofortabschaltung, um möglicherweise schlimmeren Schäden vorzubeugen.

So ist es bei einer langen, verbleibenden Restlaufzeit und/oder einer nur geringen Funktionsbeeinträchtigung der Anlage durch den Ausfall zu vertreten, dass vorläufig nur eine vorgezogene Wartung veranlaßt wird, bspw. das Nachschmieren von Wälzlagern einer Maschine, wenn deren Antriebsmotor beständig eine merklich erhöhte Stromaufnahme zeigt. Bis zu dem Zeitpunkt der vorgezogenen Wartung werden jedoch die Schätzungen hinsichtlich der Restlaufzeit ständig wiederholt, und sobald hier eine merkliche Reduzierung eintritt oder eine vorgegebene Minimal-Restlaufzeit unterschritten wird, so müssen einschneidendere Gegenmaßnahmen oder Vorkehrungen getroffen werden.

Sofern die Prognose eine mittlere, verbleibende Restlaufzeit und/oder eine mittelschwere Funktionsbeeinträchtigung der Anlage durch den Ausfall vorhersagt, so sollte eine sofortige Instandhaltung ausfallgefährdeter oder die verschlechterten Betriebsbedingungen auslösender Anlagenteile veranlaßt werden. Dies könnte der Fall sein, wenn ein wichtiges Ventil nicht innerhalb des dafür vorgesehenen Zeitraums öffnet bzw. schließt.

Weist die Prognose auf eine kurze, verbleibende Restlaufzeit und/oder eine schwerwiegende Funktionsbeeinträchtigung der Anlage durch einen bevorstehenden Ausfall einer Komponente hin, so kann über die Steuerung ein direkter Eingriff in den Prozeß veranlaßt werden, mit dem Ziel, ausfallgefährdete Anlagenteile so weit als möglich zu entlasten, bspw. durch Verschiebung von Aktivitäten der betroffenen Anlagenteile bis an das von dem Fertigungsnetzplan tolerierte Fristende. Hier steht der Schutz der Anlage im Vordergrund, wenn der Produktionsplan die vorübergehende Stillegung des betreffenden Anlagenteils zuläßt. Diese Maßnahme kann wiederum vollständig automatisiert sein oder nur einer Beobachtungsperson vorgeschlagen werden, der sodann die Entscheidung obliegt. Gleichzeitig sollte eine sofortige Behebung der Beeinträchtigungen bzw. Reparatur angeordnet werden.

Eine erfindungsgemäße Prognose läßt sich durch Ermittlung der voraussichtlichen Ausfallursache sowie ggf. deren Auswirkungen auf weitere Anlagenteile ergänzen, so dass voraussichtlich benötigte Ersatzteile identifiziert und ggf. unverzüglich bestellt werden können, sofern diese sich nicht auf Lager befinden. Dadurch wird das Instandhaltungspersonal unterstützt, indem alle für die Problembeseitigung erforderlichen Ersatzteile zur Verfügung gestellt werden.

Schließlich entspricht es der Lehre der Erfindung, dass die Durchführung des erfindungsgemäßen Verfahrens einer Kombination von Automatisierungssystem und Bedienungs- und/oder Beobachtungssystem übertragen ist. Da Bedienungs- und Beobachtungssystem von den eigentlichen Steuerungsaufgaben befreit sind, ist ihre Rechenkapazität zumeist nicht völlig ausgelastet. Aus diesem Grund bereitet es keine Schwierigkeiten, hier auch komplexe Berechnungen durchführen zu lassen, bspw. aufwendige Konsistenzbetrachtungen in Form von Vergleichen mit den Ergebnissen hinterlegter Rechenmodelle der betreffenden Anlage od. dgl. Dabei kann die Überprüfung einzelner, als Prognostika verwendeter Kriterien auch im Rahmen des Auswertungsprogramms einer Bedienungs- und Beobachtungssystem implementiert sein. Hierbei kann eine Überprüfung eines Ausfallkriteriums nach jedem Eintreffen eines Satzes neuer Meßwerte relevanter Anlagengrößen durchgeführt werden. Obzwar zur Auswertung komplizierter Kriterien möglicherweise eine Vielzahl von Betriebsgrößen laufend an die Bedienungs- und Beobachtungssystem gemeldet werden müssen, so ist dies bei der Übertragungsgeschwindigkeit gängiger Netzwerke kein Problem.

Weitere Merkmale, Einzelheiten, Vorteile und Wirkungen auf der Basis der Erfindung ergeben sich aus der nachfolgenden Beschreibung eines bevorzugten Ausführungsbeispiels der Erfindung sowie anhand der Zeichnung. Deren einzige Figur zeigt ein Leitsystem einer technischen Anlage, dessen ursprünglich auf die Anlagensteuerung beschränkte Funktionalität um das erfindungsgemäße Verfahren zur Vermeidung oder Minimierung von Fehlfunktionen der Anlage erweitert ist.

In der Zeichnung ist in schematisierter Form ein Ausschnitt aus einer technischen Anlage 1 wiedergegeben. Repräsentativ für die Vielzahl von Anlagenkomponenten ist ein "intelligentes" Ventil 2, ein normales Magnetventil 3, ein Durchflußsensor 4 und ein Wärmetauscher 5 dargestellt. Im Gegensatz zu dem normalen Ventil 3 oder Sensor 4 Umfaßt das intelligente Ventil 2 neben dem motorisch angetriebenen Ventil 6 einen oder mehrere interne Sensoren 24 sowie auch eine integrierte Auswerteeinheit 7, um damit eine Eigendiagnose durchzuführen und ggf. ein die Fehlfunktion anzeigendes Signal 9 an das Automatisierungssystem 10 zurückzusenden. Innerhalb dieses Automatisierungssystems 10 ist das eigentliche Steuerprogramm 11 abgelegt, das aufgrund verschiedener Eingangssignale 9, 12 der Anlage 1 sowie ggf. aufgrund von Vorgabesignalen 13 einer übergeordneten Bedienungs- und Beobachtungssystem 14 Steuersignale 8, 15 für die verschiedenen Anlagenstellglieder 2, 3 erzeugt und damit den von der Anlage 1 ausgeführten Prozeß in der gewünschten Weise steuert. Dieses Zusammenspiel von Anlage 1, Automatisierungssystem 10 und Bedienungs- und Beobachtungssystem 14 entspricht dem herkömmlichen Stand der Technik.

Zur Durchführung des erfindungsgemäßen Verfahrens ist im Rahmen des Automatisierungssystems 10 ein eigener Programmteil 16 vorgesehen, der als Eingangsgrößen interne und externe Informationen 17 und Informationen des Automatisierungsprogramms 11 übernimmt und anhand dieser Informationen Prognosen über möglicherweise bevorstehende Ausfälle der Anlagenkomponenten 2 - 5 erstellt. Zu diesem Zweck werden in speziell erstellten Funktionsblöcken 18 - 20 die vorliegenden Informationen 17 hinsichtlich bestimmter Kriterien überprüft, deren Ergebnisse als Prognostika, d. h. Vorzeichen für bevorstehende Anlagenfehlfunktionen dienen können.

Dabei kann es mehrere hierarchische Ebenen derartiger Funktionsblöcke 18 - 20, 25 geben. In der untersten Ebene befinden sich bspw. derartige Funktionsblöcke 18, 25 mit denen normale Meß- und Stellgeräte (z. B. Sensoren, Aktoren) über die Rückmeldesignale 9, 12 auf Funktionstüchtigkeit geprüft werden. Diese Meß- und Stellgeräte können mit einer eigenen "Intelligenz" ausgerüstet sein (2) oder nicht (3, 4).

In einer übergeordneten Funktionsebene werden anhand weiterer Kriterien 19, 20 aus den vorliegenden Informationen über aktuelle Anlagengrößen und Fehlerzustände einzelner Komponenten Prognosen erstellt, ob alle Anlagenteile reibungslos funktionieren, so dass in absehbarer Zeit keine Ausfälle einzelner Anlagenkomponenten 2 - 5 zu erwarten sind, oder ob durch Vorliegen besonderer Zustände einzelne Komponenten übermäßig belastet sind, so dass ein vorzeitiger Ausfall droht, oder möglicherweise anhand eines ungewöhnlichen Verhaltens einzelner Anlagengrößen auf einen bevorstehenden Defekt einer oder mehrerer Komponenten geschlossen werden kann. Wird bspw. über ein Steuersignal 15 ein Ventil 3 geöffnet, so muss ein voroder nachgeschalteter Durchflußsensor 4 eine entsprechende Strömung anzeigen. Ist dies nicht der Fall, so ist möglicherweise das Ventil 3 oder der Sensor 4 defekt. Nach diesem Prinzip können auch signaltechnisch nicht direkt mit dem Automatisierungssystem gekoppelte Anlagenkomponenten auf Betrieb innerhalb zulässiger Betriebsgrenzen überwacht werden, bspw. lassen sich Ablagerungen in Wärmetauschern 5 anhand von Temperatur- und Durchflußmessungen erkennen.

Die Ergebnisse dieser Prognosenbausteine 19, 20 können auf unterschiedlichem Wege weiterverarbeitet werden. Ergibt sich bei einer derartigen Prognose, das zwar ein vorzeitiger Ausfall einer oder mehrerer Komponenten zu erwarten ist, wobei dieser Ausfall jedoch noch in einer fernen Zukunft liegt, bspw. in einem Zeitraum von mehreren Wochen, so wird diese Information an die Bedienungs- und Beobachtungssystem 14 gemeldet 21, 22, um dem dortigen Personal eine vorgezogene Wartungs- oder kurzfristige Instandhaltungsmaßnahme vorzuschlagen. Bewegt sich dagegen die geschätzte Restlaufzeit einer oder mehrerer Anlagenkomponenten in einem sehr kurzen Zeitrahmen von Stunden oder gar Minuten, so kann der Prognoseteil 16 direkt auf das Automatisierungsprogramm 11 einwirken 23, um bspw. als Gegenmaßnahme einzelne Anlagenkomponenten stillzusetzen oder mit verminderter Leistung zu betreiben und dadurch deren geschätzte Betriebsdauer zu verlängern.

Der Prognose-Programmteil 16 ist programmtechnisch bevorzugt an den Automatisierungs-Programmteil 11 angefügt und wird daher bei jedem Rechenzyklus und somit in Echtzeit abgearbeitet, um bevorstehende Ausfälle möglichst frühzeitig erkennen zu können.

Bei einen höheren Rechenaufwand bedingenden Prognosekriterien 18 - 20 kann eine asynchrone Berechnung in Form einer im Hintergrund laufenden Task gewählt oder die Berechnung in einer übergeordneten Bedienungs- und Beobachtungssystem 14 durchgeführt werden.

## Patentansprüche

1. Verfahren zur Vermeidung oder Minimierung von Fehlfunktionen bei technischen Anlagen (1), wobei anhand für ein Leitsystem zugänglicher Einflußgrößen (17) wenigstens ein Kriterium (18 - 20) definiert wird, dessen Vorliegen als Prognostikum für eine bevorstehende Funktionsbeeinträchtigung und/oder einen bevorstehenden Ausfall eines oder mehrerer Anlagenteile oder -komponenten (2 - 5) verwendet wird, wobei dieses Kriterium (18 - 20) in definierten Zeitintervallen überprüft wird (16), um eine Prognose über die Wahrscheinlichkeit einer bevorstehenden Funktionsbeeinträchtigung und/oder eines bevorstehenden Ausfalls zu erstellen, wobei anhand dieser Prognose gegebenenfalls frühzeitig Gegenmaßnahmen zur Vermeidung einer Funktionsbeeinträchtigung und/oder eines Ausfalls ergriffen oder veranlaßt werden (21 - 23) und/oder Vorkehrungen getroffen werden, um die Auswirkungen einer bevorstehenden Funktionsbeeinträchtigung und/oder eines bevorstehenden Ausfalls zu minimieren, wobei ein als Prognostikum verwendetes Kriterium (18 - 20) derart von den betreffenden Einflußgrößen (17) abgeleitet ist, dass Unregelmäßigkeiten erkannt werden, wenn noch von keiner Einflußgröße (17) ein die sofortige Abschaltung der Anlage (1) oder eines Teils (2 - 4) davon erfordernder Grenzwert überschritten wird, **dadurch gekennzeichnet, dass**
a) von dem Leitsystem (10; 14) der technischen Anlage (1) wenigstens ein als Prognostikum dienendes Kriterium (18 - 20) unter Verwendung von aktuellen Anlagengrößen (8, 9, 12, 15) nahezu unverzögert und damit in Echtzeit bestimmt wird,
b) indem dieses Kriterium (18 - 20) im Rahmen eines zusätzlich zu dem Steuerprogramm (11) in einer speicherprogrammierbaren Steuerung (10) hinterlegten Funktionsbausteins implementiert ist,
c) und wobei ein zu erwartender Ausfall an eine Bedienungs- und Beobachtungsstation (14) gemeldet wird (21, 22).

2. Verfahren nach Anspruch 1, **dadurch gekennzeichnet, dass** das als Prognostikum verwendete Kriterium (18 - 20) in Zeitabständen von weniger als einer Sekunde überprüft (16) wird.

3. Verfahren nach Anspruch 1 oder 2, **dadurch gekennzeichnet, dass** das als Prognostikum verwendete Kriterium (18 - 20) in definierten Zeitabständen oder zu definierten Zeitpunkten überprüft (16) wird.

4. Verfahren nach einem der vorhergehenden Ansprüche, **dadurch gekennzeichnet, dass** das als Prognostikum verwendete Kriterium (18 - 20) zyklisch oder ereignisgesteuert im Rechenzyklus des Automatisierungssystems (10) abgearbeitet (16) wird.

5. Verfahren nach einem der vorhergehenden Ansprüche, **dadurch gekennzeichnet, dass** im Rahmen der Überprüfung (16) des als Prognostikum verwendeten Kriteriums (18 - 20) Anderungstendenzen einer oder mehrerer Einflußgrößen (17) einbezogen werden.

6. Verfahren nach einem der vorhergehenden Ansprüche, **dadurch gekennzeichnet, dass** im Rahmen der Überprüfung (16) des als Prognostikum verwendeten Kriteriums (18 - 20) Plausibiltätsbetrachtungen zwischen zwei oder mehreren Einflußgrößen (17) angestellt werden.

7. Verfahren nach einem der vorhergehenden Ansprüche, **dadurch gekennzeichnet, dass** im Rahmen der Prognose (16) über die bevorstehende Ausfallwahrscheinlichkeit die verbleibende Laufzeit der Anlage (1) bzw. einer Teilanlage oder einer betroffenen Komponente (2 - 5) und/oder der Grad der Funktionsbeeinträchtigung der Anlage (1) durch den bevorstehenden Ausfall abgeschätzt werden, um die Art der Gegenmaßnahmen und/oder Vorkehrungen zu bestimmen.

8. Verfahren nach einem der vorhergehenden Ansprüche, **dadurch gekennzeichnet, dass** bei einer langen, verbleibenden Restlaufzeit und/oder einer nur geringen Funktionsbeeinträchtigung der Anlage (1) durch den Ausfall eine vorgezogene Wartung veranlaßt (21, 22) wird.

9. Verfahren nach einem der vorhergehenden Ansprüche, **dadurch gekennzeichnet, dass** bei einer mittleren, verbleibenden Restlaufzeit und/oder einer mittelschweren Funktionsbeeinträchtigung der Anlage (1) durch den Ausfall eine sofortige Instandhaltung ausfallgefährdeter Anlagenteile oder -komponenten (2 - 5) veranlaßt (21 - 22) wird.

10. Verfahren nach einem der vorhergehenden Ansprüche, **dadurch gekennzeichnet, dass** bei einer kurzen, verbleibenden Restlaufzeit und/oder einer schwerwiegenden Funktionsbeeinträchtigung der Anlage (1) durch den drohenden Ausfall einer Komponente (2 - 5) über dieses Automatisierungsprogramm (11) ein direkter Eingriff in den Prozeß veranlaßt (23) wird, um ausfallgefährdete Anlagenteile oder - komponenten (2 - 5) so weit als möglich zu entlasten, bspw. durch Verschiebung von Aktivitäten der betroffenen Anlagenteile (2 - 5) bis an das von dem Fertigungsnetzplan tolerierte Fristende.

11. Verfahren nach einem der vorhergehenden Ansprüche, **dadurch gekennzeichnet, dass** die voraussichtliche Ausfallursache sowie ggf. deren Auswirkungen auf weitere Anlagenteile oder -komponenten (2 - 5) ermittelt werden, um voraussichtlich benötigte Resourcen (Ersatzteile, Personal, Material) unverzüglich anzufordern, sofern diese nicht verfügbar sind.

12. Verfahren nach einem der vorhergehenden Ansprüche, **dadurch gekennzeichnet, dass** ein als Prognostikum verwendetes Kriterium (18 - 20) im Rahmen des Auswertungsprogramms eines Bedienungs- und Beobachtungssystems (14) implementiert ist und zyklisch oder ereignisgesteuert abgearbeitet wird.

## Claims

1. Method for preventing or minimising operational failures in technical installations (1), in which at least one criterion (18 - 20) is defined based on influencing quantities (17) accessible to a control system, the existence of said criterion being used as a prognostic for impending functional impairment and/or impending failure of one or more installation parts or components (2 - 5), said criterion (18 - 20) being monitored (16) at defined time intervals, to establish a probability forecast for an impending operational impairment and/or impending failure, early countermeasures being taken or prompted (21 - 23) on the basis of said forecast to prevent operational impairment and/or failure and/or precautions being taken to minimise the effects of an impending operational impairment and/or impending failure, a criterion (18 - 20) used as a prognostic being derived from the relevant influencing quantities (17) in such a way that irregularities are identified before any of the influencing quantities (17) exceeds a limit that requires the immediate shutdown of the installation (1) or part (2 - 4) thereof,
**characterised in that**
a) at least one criterion (18 - 20) serving as a prognostic is determined by the control system (10; 14) of the technical installation (1) using current installation quantities (8, 9, 12, 15) almost without delay and therefore in real time,
b) this criterion (18 - 20) is implemented in the context of a function block stored, in addition to the control program (11) in a programmable controller (10),
c) and an expected failure is signalled (21, 22) to a control and monitoring station (14).

2. Method according to Claim 1,
**characterised in that** the criterion (18 - 20) used as a prognostic is monitored (16) at time intervals of less than one second.

3. Method according to Claim 1 or 2,
**characterised in that** the criterion (18 - 20) used as a prognostic is monitored (16) at defined time intervals or at defined times.

4. Method according to one of the preceding Claims,
**characterised in that** the criterion (18 - 20) used as a prognostic is executed (16) in a cyclical or event-driven manner in the computation cycle of the automation system (10).

5. Method according to one of the preceding Claims,
**characterised in that** the tendencies of one or more influencing quantities (17) to change are taken into account when monitoring (16) the criterion (18 - 20) used as a prognostic.

6. Method according to one of the preceding Claims,
**characterised in that** plausibility analyses are carried out between two or more influencing quantities (17) when monitoring (16) the criterion (18 - 20) used as a prognostic.

7. Method according to one of the preceding Claims,
**characterised in that** in the context of the forecast (16) relating to the probability of impending failure, the remaining runtime of the installation (1) or a sub-installation or an affected component (2 - 5) and/or the degree of operational impairment of the installation (1) resulting from the impending failure are estimated, in order to determine the nature of the countermeasures and/or precautions.

8. Method according to one of the preceding Claims,
**characterised in that** in the case of a long remaining runtime and/or only minor operational impairment of the installation (1) resulting from the failure, early maintenance is prompted (21, 22).

9. Method according to one of the preceding Claims,
**characterised in that** in the case of a moderate remaining runtime and/or moderately serious operational impairment of the installation (1) resulting from the failure, immediate repair of parts or components of the installation (2 - 5) at risk of failure is prompted (21 - 22).

10. Method according to one of the preceding Claims,
**characterised in that** in the case of a short remaining runtime and/or serious operational impairment of the installation (1) resulting from the threatened failure of a component (2 - 5), direct intervention in the process can be prompted (23) via this automation program (11) with the aim of relieving the parts or components of the installation (2 - 5) at risk of failure as far as possible, e.g. by postponing activities of the affected parts of the installation (2 - 5) until the last date tolerated by the manufacturing network schedule.

11. Method according to one of the preceding Claims,
**characterised in that** the probable cause of the failure and if necessary its effects on further parts or components of the installation (2 - 5) are determined in order to request resources (replacement parts, personnel, materials) that are likely to be required without delay, if these resources are not available.

12. Method according to one of the preceding Claims,
**characterised in that** a criterion (18 - 20) used as a prognostic is implemented in the context of the evaluation program of a control and monitoring system (14) and is executed in a cyclical or event-driven manner.

## Revendications

1. Procédé pour éviter ou minimiser des dysfonctionnements dans des installations techniques (1), au moins un critère (18 à 20) étant défini à l'aide de grandeurs d'influence (17) accessibles à un système de commande, critère dont la présence est utilisée comme pronostic pour un prochain dysfonctionnement et/ou pour une prochaine panne d'une ou plusieurs parties ou éléments d'installation (2 à 5), ce critère (18 à 20) étant vérifié (16) à intervalles de temps définis pour établir un pronostic de la probabilité d'un prochain dysfonctionnement et/ou d'une prochaine panne, des contre-mesures pour éviter un dysfonctionnement et/ou une panne étant éventuellement prises ou déclenchées (21 à 23) à temps à l'aide de ce pronostic et/ou des précautions étant prises pour minimiser les effets d'un prochain dysfonctionnement et/ou d'une prochaine panne, un critère (18 à 20) utilisé comme pronostic étant déduit des grandeurs d'influence concernées (17) de telle sorte que des anomalies sont détectées même si aucune grandeur d'influence (17) ne dépasse encore une valeur limite nécessitant l'arrêt immédiat de l'installation (1) ou d'une partie (2 à 4) de celle-ci,
**caractérisé par le fait que**
a) le système de commande (10 ; 14) de l'installation technique (1) détermine presque sans retard et donc en temps réel au moins un critère (18 à 20) servant de pronostic en utilisant des grandeurs d'installation actuelles (8, 9, 12, 15),
b) ce critère (18 à 20) étant mis en oeuvre dans le cadre d'un module fonctionnel enregistré en plus du programme de commande (11) dans une commande par programme enregistré (10),
c) et une panne à venir étant signalée (21, 22) à un poste de commande et de surveillance (14).

2. Procédé selon la revendication 1, **caractérisé par le fait que** le critère (18 à 20) utilisé comme pronostic est vérifié (16) à des intervalles de temps de moins d'une seconde.

3. Procédé selon la revendication 1 ou 2, **caractérisé par le fait que** le critère (18 à 20) utilisé comme pronostic est vérifié (16) à des intervalles de temps définis ou à des instants définis.

4. Procédé selon l'une des revendications précédentes, **caractérisé par le fait que** le critère (18 à 20) utilisé comme pronostic est traité (16), de façon cyclique ou suivant une commande par événements, dans le cycle de calcul du système d'automatisation (10).

5. Procédé selon l'une des revendications précédentes, **caractérisé par le fait que** des tendances de variations d'une ou plusieurs grandeurs d'influence (17) sont incluses dans le cadre de la vérification (16) du critère (18 à 20) utilisé comme pronostic.

6. Procédé selon l'une des revendications précédentes, **caractérisé par le fait que** des considérations de vraisemblance entre deux ou plusieurs grandeurs d'influence (17) sont prévues dans le cadre de la vérification (16) du critère (18 à 20) utilisé comme pronostic.

7. Procédé selon l'une des revendications précédentes, **caractérisé par le fait que** la durée de fonctionnement restante de l'installation (1) ou d'une partie d'installation ou d'un élément concerné (2 à 5) et/ou le degré du dysfonctionnement de l'installation (1) à cause de la prochaine panne sont estimés dans le cadre des pronostics (16) concernant la probabilité de panne prochaine pour déterminer le type des contre-mesures et/ou précautions à prendre.

8. Procédé selon l'une des revendications précédentes, **caractérisé par le fait que**, dans le cas d'une durée de fonctionnement restante longue et/ou d'un dysfonctionnement seulement léger de l'installation (1) à cause de la panne, on déclenche (21, 22) une maintenance partielle.

9. Procédé selon l'une des revendications précédentes, **caractérisé par le fait que**, dans le cas d'une durée de fonctionnement restante moyenne et/ou d'un dysfonctionnement moyen de l'installation (1) à cause de la panne, on déclenche (21, 22) une réparation immédiate de parties ou éléments d'installation (2 à 5) mis en danger par la panne.

10. Procédé selon l'une des revendications précédentes, **caractérisé par le fait que**, dans le cas d'une durée de fonctionnement restante courte et/ou d'un dysfonctionnement grave de l'installation (1) à cause de la panne imminente d'un élément (2 à 5), on déclenche (23) par l'intermédiaire de ce programme d'automatisation (11) une intervention directe dans le processus pour soulager autant que possible des parties ou éléments d'installation (2 à 5) mis en danger par la panne, par exemple en repoussant des activités des parties d'installation concernées (2 à 5) jusqu'à la fin du délai toléré par la planification de fabrication.

11. Procédé selon l'une des revendications précédentes, **caractérisé par le fait qu'**on détermine les causes de panne probables ainsi qu'éventuellement leurs effets sur d'autres parties ou éléments d'installation (2 à 5) pour demander sans retard des ressources probablement nécessaires (pièces de rechange, personnel, matériel) dans la mesure où elles ne sont pas disponibles.

12. Procédé selon l'une des revendications précédentes, **caractérisé par le fait qu'**un critère (18 à 20) utilisé comme pronostic est mis en oeuvre dans le cadre du programme d'évaluation d'un système de commande et de surveillance (14) et est traité de façon cyclique ou suivant une commande par événements.
